# FASCICULE DE BREVET EUROPEEN

(11) **EP 3 581 278 B1**
(45) Date de publication et mention de la délivrance du brevet: **29.06.2022**
(21) Numéro de dépôt: 19176136.0
(22) Date de dépôt: 23.05.2019
(51) Int. Cl.: B05C 5/02, B05C 11/10, B29B 13/02

(54) **DISPOSITIF DE DISTRIBUTION DE COLLE FONDUE A BRAS DE SUPPORT MOBILE**
VORRICHTUNG ZUR VERTEILUNG VON SCHMELZKLEBER MIT EINEM MOBILEN HALTEARM
DEVICE FOR DISPENSING MELTED ADHESIVE WITH MOBILE SUPPORTING ARM

(30) Priorité: 15.06.2018 FR 1855302
(43) Date de publication de la demande: 18.12.2019
(73) Titulaire: MIBOX, 35500 Vitre (FR)
(72) Inventeur: LAYER, Yannick, 35000 RENNES (FR)
(74) Mandataire: Vidon Brevets & Stratégie

(56) Documents cités:
- DE-A1-102011 013 675
- DE-U1-202005 006 300
- US-A1- 2014 120 254
- US-B2- 7 626 143

## Description

### 1. Domaine de l'invention

Le domaine de l'invention est celui des outillages mis en œuvre pour la fabrication de contenants en carton et/ou en papier et/ou en plastique, à partir d'un flan (ou découpe), permettant par exemple le stockage de produits.

Plus précisément, l'invention concerne les outillages mis en œuvre pour encoller certaines parties d'un flan avant qu'il soit conformé dans sa forme définitive de contenant.

### 2. Art antérieur

Les emballages en carton, notamment sous la forme de boîtes ou de cagettes, sont largement utilisés pour assurer le stockage de produits.

Ces emballages sont formés à partir de flans se présentant sous la forme d'une feuille de carton, de papier épais ou autre prédécoupée et présentant des zones de pliage.

Ces flancs alimentent une machine de pliage qui permet de leur donner leur forme définitive de contenants.

Ces machines de pliage intègrent des dispositifs d'encollage pour encoller certaines zones des flancs avec de la colle fondue de manière telle qu'après avoir été encollés puis mis en forme, les flancs conservent leur forme définitive de contenant.

On connaît différents types de dispositifs d'encollage, encore appelés dispositifs de distribution de colle fondue.

Un premier type de dispositif de distribution de colle fondue comprend un fondoir auquel des applicateurs de colle sont reliés au moyen de tuyaux de distribution.

Le fondoir permet de faire fondre des pastilles de colle. La colle ainsi fondue est ensuite acheminée via les tuyaux vers les applicateurs (ou buse d'application) situés aux endroits où la colle doit être déposée. La colle est alors déposée au moyen des applicateurs aux zones du flan devant être encollées.

Si l'on souhaite par exemple déposer de la colle à deux endroits, le dispositif comprendra deux applicateurs chacun relié au fondoir au moyen d'un tuyau.

Chaque applicateur comprend notamment un bloc aluminium, un module de dépose de colle piloté par air comprimé ou électriquement.

Les dispositifs d'encollage de ce type présentent l'avantage d'offrir une grande souplesse d'utilisation dans la mesure où le positionnement des applicateurs aux endroits à encoller et le réglage de la distance entre deux applicateurs sont obtenus de manière excessivement aisée en déplaçant les applicateurs compte tenu de la souplesse des tuyaux flexibles reliant chaque applicateur au fondoir.

Les dispositifs d'encollage de ce type présentent en revanche les quelques inconvénients suivants :
- ils mettent en œuvre un nombre important de composants (applicateurs, tuyaux...) ;
- ils supposent la mise en oeuvre d'un nombre important d'éléments chauffants tout le long du trajet de la colle fondue depuis le fondoir jusqu'aux applicateurs pour garantir que la colle soit maintenue à l'état fondue jusqu'à ce qu'elle soit appliquée ;
- leur coût de fabrication est assez élevé.

Le document US-B2-7626143 décrit un dispositif de distribution de colle fondue dans lequel chaque applicateur est relié à un fondoir, chaque fondoir étant relié au moyen d'un flexible à un dispositif d'alimentation en colle.

Les dispositifs de ce type mettent notamment en oeuvre un nombre important de composants (applicateurs, tuyaux, fondoir...) si bien que leur coût de fabrication est assez élevé.

Un deuxième type de dispositif de distribution de colle fondue comprend un fondoir sur lequel sont directement fixés, selon les besoins, un ou plusieurs applicateurs.

Le document DE-U1-2020056300 décrit un dispositif de ce type mono applicateur.

Il existe aussi des dispositifs pluri applicateurs. Le fondoir comprend une pluralité de points de fixation d'applicateurs répartis le long d'un axe de réglage. Il est ainsi possible de modifier le nombre d'applicateurs et/ou de régler la distance entre eux le long de l'axe de réglage.

Comparativement au dispositif d'encollage selon le premier type, ceux selon ce deuxième type comprennent moins de composants, moins d'éléments à régler et sont moins chers à fabriquer.

Ils présentent toutefois l'inconvénient d'être plus rigides en terme d'utilisation dans la mesure où le positionnement des applicateurs aux endroits à encoller et le réglage de la distance entre deux applicateurs offrent moins de possibilités, les différents points de fixation des applicateurs étant fixes et limités.

### 3. Objectifs de l'invention

L'invention a notamment pour objectif d'apporter une solution efficace à au moins certains de ces différents problèmes.

En particulier, selon au moins un mode de réalisation, un objectif de l'invention est de fournir un dispositif de distribution de colle fondue qui soit amélioré comparativement aux dispositifs de l'art antérieur.

Notamment, l'invention a pour objectif, selon au moins un mode de réalisation, de fournir un tel dispositif de dépose de colle fondue qui soit polyvalent.

En particulier, un objectif de l'invention est de procurer un tel dispositif dont le réglage de la distance entre applicateurs est aisé.

Un autre objectif de l'invention est, selon au moins un mode de réalisation, de fournir un tel dispositif qui soit simple de conception et/robuste et/ou économique.

### 4. Présentation de l'invention

Pour ceci, l'invention propose un dispositif de distribution de colle fondue comprenant un fondoir de colle et au moins deux buses d'application de colle.

Selon l'invention, l'une desdites buses est fixée audit fondoir, l'autre desdites buses étant solidarisée à l'extrémité d'un bras de support, ledit bras de support étant relié de manière mobile audit fondoir de façon à régler l'écartement entre lesdites buses d'application, ladite au moins une buse fixée audit fondoir et ledit bras de support se trouvant en communication fluidique directe avec le fondoir, et ladite au moins une buse fixée audit bras de support se trouvant en communication fluidique directe avec ledit bras de support.

Ainsi, l'invention repose sur une approche originale consistant à fixer une buse d'application de colle directement sur le fondoir et à fixer une autre buse d'application de colle à un bras de support lui-même fixé au fondoir de manière mobile.

Cette solution simple de conception permet d'offrir une grande souplesse dans le réglage de la distance entre les buses qui est obtenu en déplaçant le bras de support par rapport au fondoir. L'invention offre ainsi une grande quantité de positions de réglage possibles.

L'invention procure ainsi un dispositif de dépose de colle fondue optimisé dont le réglage de la distance entre deux buses est simple et multiple ce qui confère au dispositif selon l'invention une grande polyvalence.

En outre, la ou les buses fixées au bras sont en communication fluidique directe avec le bras support, et la ou les buses fixées au fondoir et le bras solidarisé au fondoir sont en communication fluidique directe avec le fondoir.

En d'autre terme, la colle fondue est acheminée depuis le fondoir vers la ou les buses qui y sont fixées de manière directe, c'est-à-dire sans tuyau. De même la colle fondue est acheminée depuis le fondoir vers le bras de support de manière directe, c'est-à-dire sans tuyau, tout comme la colle fondue est acheminée depuis le bras de support vers la ou les buses qui y sont fixées de manière directe, c'est-à-dire sans tuyau.

On simplifie ainsi le dispositif, limite le risque de fuite de colle et en réduit le cout.

Selon une caractéristique possible, ledit fondoir comprend des orifices de distribution de colle fondue, ladite au moins une buse fixée audit fondoir comprenant un orifice d'introduction de colle fondue coopérant directement avec un desdits orifices de distribution de colle fondue dudit fondoir.
Cette architecture de liaison fluidique directe entre les buses et le fondoir permet d'éviter l'utilisation de tuyaux flexibles tels que ceux mis en œuvre dans l'art antérieur. On simplifie ainsi le dispositif.

Selon une caractéristique possible, ledit fondoir comprend des orifices de distribution de colle fondue, ledit bras de support étant traversé par au moins un canal d'acheminement de colle fondue, ledit canal comprenant une entrée coopérant directement avec un desdits orifices de distribution de colle fondue dudit fondoir et au moins une sortie, ladite au moins une buse fixée audit bras de support comprenant un orifice d'introduction de colle fondue coopérant directement avec ladite sortie dudit canal dudit bras de support.

Cette architecture de liaison fluidique directe entre les buses et le bras de support permet d'éviter l'utilisation de tuyaux flexibles tels que ceux mis en œuvre dans l'art antérieur. On simplifie ainsi le dispositif.

Selon une caractéristique possible, ledit bras de support est relié de manière mobile en rotation audit fondoir de façon à régler l'écartement entre lesdites buses d'application.

Ceci permet de régler facilement et efficacement la position du bras de support et celle de la ou des buses qu'il porte.

Selon une caractéristique possible, l'une des extrémités dudit bras de support est reliée audit fondoir au moyen d'une liaison pivot.

Selon une caractéristique possible, ledit bras de support comprend une pluralité de portions de bras articulées entre-elles deux-à-deux.

Ceci permet d'offrir plus de polyvalence dans le réglage de la position de la ou des buses solidaires du bras de support.

Selon une caractéristique possible, lesdites portions de bras sont articulées entre-elles au moyen de liaisons pivot d'axes essentiellement parallèles entre eux et à l'axe de la liaison pivot reliant ladite extrémité dudit bras de support audit fondoir.

Selon une caractéristique possible, ledit bras de support est relié de manière mobile en translation audit fondoir de façon à régler l'écartement entre lesdites buses d'application.

Ceci permet également de régler facilement et efficacement la position du bras de support et celle de la ou des buses qu'il porte.

Selon une caractéristique possible, un dispositif selon l'invention comprend des premiers moyens de solidarisation d'une desdites buses d'applications à l'extrémité dudit bras de support, lesdits premiers moyens de solidarisation comprenant plusieurs premiers points de solidarisation répartis le long d'un premier axe de réglage.

Il est ainsi possible de fixer plusieurs buses au bras de support ou d'offrir un réglage supplémentaire de la position de la buse que l'on souhaite utiliser. On améliore ainsi la polyvalence du dispositif.

Selon une caractéristique possible, un dispositif selon l'invention comprend des deuxièmes moyens de solidarisation d'une desdites buses d'application audit fondoir, lesdits deuxièmes moyens de solidarisation comprenant plusieurs deuxièmes points de solidarisation répartis le long d'un deuxième axe de réglage.

Il est ainsi possible de fixer plusieurs buses au fondoir ou d'offrir un réglage supplémentaire de la position de la buse que l'on souhaite utiliser. On améliore ainsi la polyvalence du dispositif.

Selon une caractéristique possible, lesdits premier et deuxième axes de réglage s'étendent dans un même plan.

Selon une caractéristique possible, un dispositif selon l'invention comprend des moyens de réglage de la position dudit bras de support par rapport audit fondoir.

Selon une caractéristique possible, lesdits moyens de réglage de la position dudit bras de support par rapport audit fondoir sont manuels ou mécanisés.

### 5. Liste des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
- la figure 1 illustre une vue de face en perspective d'un dispositif de distribution de colle fondue selon l'invention ;
- la figure 2 illustre un exemple de moyens de réglage de la position du bras de support par rapport au fondoir comprenant une poignée ;
- la figure 3 illustre une vue de dessous en perspective du dispositif de distribution de colle fondue illustré à la figure 1 ;
- les figures 4 à 6 illustrent différentes vues en perspective d'un autre dispositif de distribution de colle fondue selon l'invention avec le bras de support dans différentes positions.

### 6. Description de modes de réalisation particuliers

### 6.1. Architecture

On présente en relation avec les figues 1 à 6 un mode de réalisation d'un dispositif de distribution de colle fondue selon l'invention.

Ainsi que cela est représenté, un tel dispositif de distribution de colle fondue 1 comprend un fondoir 10 et au moins deux buses d'application de colle 11.

Le fondoir peut-être optionnellement monté mobile en translation sur des glissières 300.

Le fondoir 10 comprend classiquement au moins un orifice d'amenée de pastilles de colle ainsi que des éléments de chauffe destinés à chauffer afin de faire fondre les pastilles de colle.

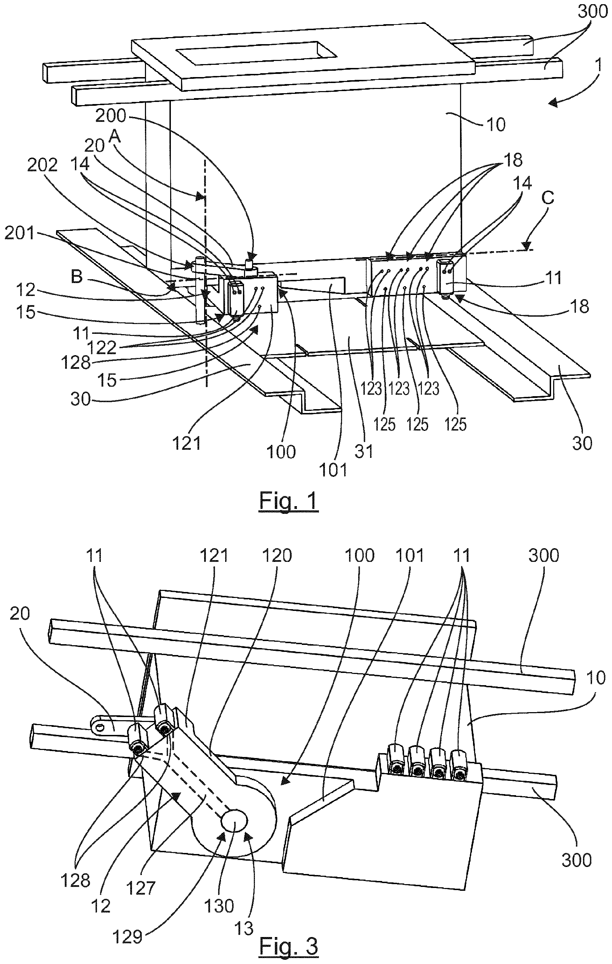

L'une des buses d'application de colle 11 est fixée directement sur le fondoir 10. Il s'agit de la buse de droite sur la figure 1.

L'autre buse d'application de colle est solidarisée à l'extrémité d'un bras de support 12. Il s'agit de la buse de gauche sur la figure 1.

Le bras de support 12 est relié de manière mobile au fondoir 10. Il est ainsi possible de régler l'écartement entre les deux buses 11.

Plus précisément, l'extrémité du bras de support 12 opposée à celle à laquelle est fixée la buse d'application de colle 11 est solidarisée de manière mobile en rotation au fondoir 10.

Pour cela, cette extrémité du bras de support 12 est reliée au fondoir au moyen d'une liaison pivot 13 d'axe A.

La liaison pivot 13 peut par exemple être réalisée en solidarisant le bras de support 12 au fondoir 10 au moyen d'un axe 130, solidaire du fondoir, autour duquel il est libre en rotation.

Un évidement 100 est ménagé dans le fond du fondoir 10 pour permettre au bras de support 12 de s'y déplacer lorsqu'il pivote autour de l'axe de la liaison pivot 13.

Une butée latérale 101 est ménagée d'un côté de l'évidement 100.

Le bras de support 12 comprend ici une portion de guidage 120 prévue pour se déplacer à l'intérieur de l'évidement 100 ainsi qu'une portion de fixation 121 à laquelle peut être solidarisée au moins une buse d'application de colle 10.

Le bras de support 12 présente ici une section en forme de L, la portion de fixation 121 s'étendant essentiellement perpendiculairement à la position de guidage 120. Il pourrait alternativement présenter une autre forme. La portion de fixation 121 comprend des premiers moyens de solidarisation d'au moins une buse d'application 11. Ces premiers moyens de solidarisation comprennent ici des trous taraudés 122 permettant la fixation d'une buse d'application 11 au moyen de vis 14. Les moyens de solidarisation pourraient comprendre des tiges filetées pour solidariser une buse d'application au moyen d'écrous. Toute autre solution de solidarisation adaptée peut être envisagée. Ces moyens de solidarisation peuvent également comprendre des pions de centrage (non représentés) aptes à coopérer avec des orifices de centrage ménagés à cet effet dans les buses d'application.

Les moyens de solidarisation peuvent comprendre plusieurs points de solidarisation 15 répartis le long d'un axe de réglage B. Chaque point de solidarisation permet de solidariser une buse. Il peut comprendre des trous taraudés, tiges filetées ou autres comme cela a été indiqué plus haut.

Ces points de solidarisation peuvent permettre de fixer plusieurs buses 10 à l'extrémité du bras de support 11 et/ou de modifier la position d'une buse 11 le long de l'axe de réglage B.

Ici, l'axe de réglage B est orthogonal à l'axe A de la liaison pivot 13.

Le dispositif comprend des moyens de réglage de la position du bras de support 12 par rapport au fondoir 10.

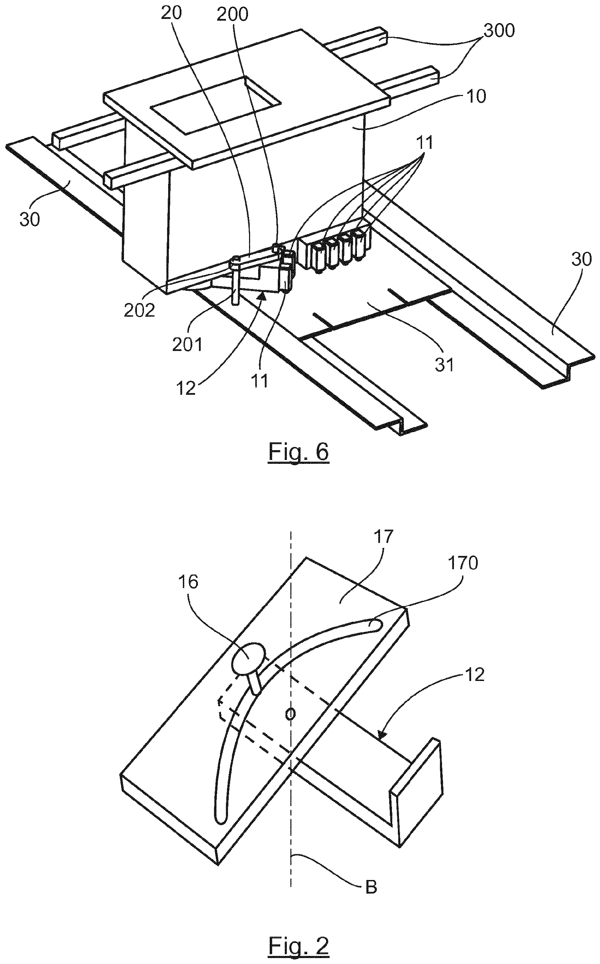

Ces moyens de réglage peuvent être manuels. Ils peuvent dans ce cas par exemple comprendre (cf. figure 2) une poignée 16 solidaire du bras de support 12 et pouvant se déplacer dans une rainure en arc de cercle 170 ménagée dans une platine 17 fixe, par exemple solidaire du fondoir ou du bâti 200 du dispositif. Cette poignée pourra être vissée contre la platine pour bloquer le déplacement du bras de support autour de l'axe A ou dévissée pour permettre le déplacement du bras de support au tour de l'axe A en déplaçant la poignée dans la rainure 170.

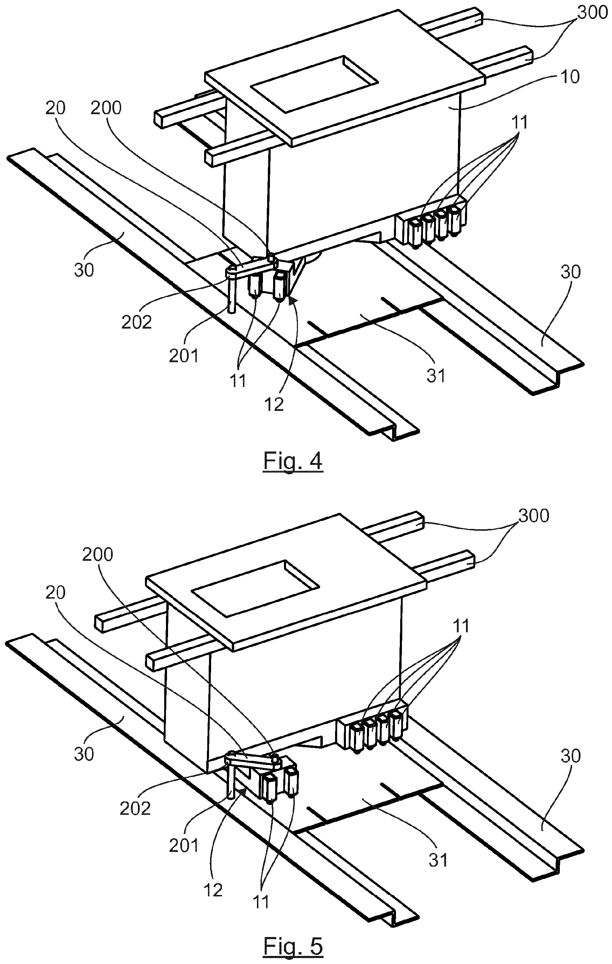

Dans des variantes (cf. figures 1, 3-7), les moyens de réglage de la position du bras de support 11 par rapport au fondoir 10 sont mécanisés. Dans ce cas le bras de support pourra être entrainé en mouvement au moyen d'un actionneur comme un vérin, un moteur le cas échéant associé à une transmission linéaire ou en rotation, notamment par biellette, courroie, chaine, vis ou par tout autre moyen adapté.

Dans la variante illustrée aux figures 1, 3-6, le bras de support 12 est relié au moyen d'une biellette 20 à un autre système mécanique de l'installation de fabrication d'emballage au sein de laquelle le dispositif de distribution de colle est intégré. En l'occurrence, deux guides de découpe 30 sont placés sous le fondoir 10 pour permettre le guidage d'une découpe 31 à mettre en forme pour former un contenant. Selon la taille du contenant à former, les découpes présentent des dimensions différentes. Les guides de découpe 30 peuvent ainsi être rapprochés ou éloignés l'un de l'autre pour permettre le guidage de découpes plus ou moins larges.

En particulier, le guide de découpe 30 placé dans la région des deuxièmes moyens de solidarisation fixes est fixe, alors que le guide de découpe 30 placé dans la région des premiers moyens de solidarisation solidaires du bras de support 12, et donc mobiles, est également mobile. Le déplacement du guide de découpe 30 mobile est classiquement assuré par des moyens d'entrainement connus en soit (actionneur, transmission...).

La biellette 20 est d'une part reliée au bras de support 12 un moyen d'une liaison pivot 200, et d'autre part relié à un axe 201, solidaire du guide de découpe 30 mobile, au moyen d'une liaison pivot 202, ces deux liaisons pivot ayant des axes essentiellement parallèles.

Ainsi, lorsque les moyens d'entrainent du guide de découpe mobile sont mis en œuvre pour assurer le déplacement du guide de découpe 30 mobile afin de le rapprocher ou de l'éloigner du guide de découpe 30 fixe, un déplacement un rotation du bras par rapport 12 au fondoir 10 est obtenu.

Ainsi, le réglage de la distance entre les guides de découpe 30 pour accueillir une découpe de dimensions données s'accompagne du réglage de la distance entre les buses pour encoller des découpes de ces dimensions.

Cette variante permet ainsi, au cours du réglage du dispositif de pliage et d'encollage lors d'un changement de dimension des découpes à mettre en forme, de régler le dispositif (buses et guides de découpe) en une seule opération.

Le dispositif comprend des deuxièmes moyens de solidarisation d'au moins une buse d'application 11 directement au fondoir 10. Ces moyens de solidarisation comprennent ici des trous taraudés 123 permettant la fixation d'une buse d'application 11 au moyen de vis 14. Ces moyens de solidarisation pourraient comprendre des tiges filetées pour solidariser une buse d'application au moyen d'écrous. Toute autre solution de solidarisation adaptée peut être envisagée. Ces moyens de solidarisation peuvent également comprendre des pions de centrage (non représentés) aptes à coopérer avec des orifices de centrage ménagés à cet effet dans les buses d'application.

Les deuxièmes moyens de solidarisation peuvent comprendre plusieurs points de solidarisation 18 répartis le long d'un axe de réglage C. Chaque point de solidarisation permet de solidariser une buse. Il peut comprendre des trous taraudés, tiges filetées ou autres comme cela a été indiqué plus haut.

Ces points de solidarisation peuvent permettre de fixer plusieurs buses 10 au fondoir et/ou de modifier la position d'une buse 11 le long de l'axe de réglage C.

Les axes de réglage B et C peuvent ou non se situer dans un même plan.

Le fondoir 10 comprend des orifices de distribution de colle fondue 125 qui débouchent au niveau des deuxièmes moyens de solidarisation.

Chaque buse 11 comprend un orifice d'introduction de colle fondue (non représenté).

Lorsqu'une buse 11 est solidarisée au fondoir 10 via les deuxièmes moyens de solidarisation, son orifice d'introduction coopère avec l'orifice de distribution de colle fondue 125 correspondant du fondoir. L'étanchéité de la connexion est par exemple assurée au moyen de joints notamment de joints toriques. La connexion entre la buse et le fondoir est ainsi directe, c'est-à-dire sans tuyau.

Le bras de support 12 est traversé par un canal d'acheminement de colle fondue 127. Ce canal 127 termine en un faisceau de canaux présentant chacun en sortie un orifice de distribution de colle fondue 128. Chaque orifice de distribution de colle fondue 128 débouche à l'extrémité du bras de support 12 au niveau d'un des premiers moyens de solidarisation.

Lorsqu'une buse 11 est solidarisée au bras de support 12 via les premiers moyens de solidarisation, son orifice d'introduction coopère avec l'orifice de distribution de colle fondue 128 correspondant du bras 12. L'étanchéité de la connexion est par exemple assurée au moyen de joints notamment de joints toriques. La connexion entre la buse et le bras est ainsi directe, c'est-à-dire sans tuyau.

Le canal d'acheminement de colle fondue 127 du bras 12 est relié à un orifice de distribution de colle fondue (non représenté) du fondoir 10. Cet orifice débouche au niveau de la liaison entre le bras 12 et le fondoir 10. Le raccord entre le canal 127 et l'orifice du fondoir 10 est réalisé au moyen d'une liaison rotative étanche 129 connue en soit de l'homme du métier (par exemple de type raccord tournant).

### 6.2. Variantes

Dans une variante, le bras de support 12 comprend une pluralité de portions de bras articulées entre-elles deux-à-deux. Les portions de bras sont articulées entre-elles au moyen de liaisons pivot d'axes essentiellement parallèles entre eux et à l'axe de la liaison pivot reliant le bras de support au fondoir.

Dans une autre variante, le bras de support est relié au fondoir de manière mobile en translation, plutôt qu'en rotation, de façon à régler l'écartement entre les buses d'application. Dans ce cas, le bras de support sera relié au fondoir par une liaison glissière.

### 6.3. Fonctionnement

Le réglage de la distance ou entraxe entre deux buses d'application de colle est obtenu en déplaçant le bras de support 12 par rapport au fondoir 10.

Dans le cas d'un réglage manuel, l'opérateur desserre la poignée 16 de manière à déverrouiller le déplacement du bras de support. L'opérateur peut alors déplacer la poignée 16 le long de la rainure 170 et ainsi déplacer le bras de support autour de l'axe A de la liaison pivot 13 pour rapprocher ou éloigner la buse ou le groupe de buses d'application solidaire(s) du bras de support 12 de la buse ou du groupe de buses d'application solidaire(s) du fondoir 10 selon le sens de déplacement de la pognée 16 dans la rainure 170.

Une fois l'écartement souhaité obtenu, l'opérateur resserre la poignée 16 pour verrouiller le déplacement du bras de support et maintenir le bras de support en position.

En complément ou alternativement, l'écartement entre la buse ou le groupe de buses d'application solidaire(s) du bras de support 12 et la buse ou le groupe de buses d'application solidaire(s) du fondoir 10 peut être ajusté en modifiant les points de solidarisation 15, 18 utilisés pour solidariser les buses au bras et au fondoir.

Dans le cas d'un réglage mécanisé, le déplacement du bras de support est obtenu à l'aide d'un actionneur ou d'un autre système mécanique de l'installation de fabrication d'emballage au sein de laquelle le dispositif de distribution de colle est intégré (par exemple le système mécanique permettant d'assurer le réglage de la position des guides de découpe tel que décrit plus haut). L'opérateur pourra commander le déplacement du bras de support au moyen d'un système de commande par exemple depuis une interface homme machine.

## Revendications

1. Dispositif de distribution de colle fondue (1) comprenant un fondoir (10) de colle et au moins deux buses d'application de colle (11),
**caractérisé en ce que** l'une desdites buses (11) est fixée audit fondoir (10), l'autre desdites buses (11) étant solidarisée à l'extrémité d'un bras de support (12), ledit bras de support (12) étant relié de manière mobile audit fondoir (10) de façon à régler l'écartement entre lesdites buses d'application (11),
ladite au moins une buse (11) fixée audit fondoir (10) et ledit bras de support (12) se trouvant en communication fluidique directe avec le fondoir (10), et ladite au moins une buse (11) fixée audit bras de support (12) se trouvant en communication fluidique directe avec ledit bras de support (12).

2. Dispositif selon la revendication 1 dans lequel ledit fondoir (10) comprend des orifices de distribution de colle fondue (125), ladite au moins une buse (11) fixée audit fondoir (10) comprenant un orifice d'introduction de colle fondue coopérant directement avec un desdits orifices de distribution de colle fondue (125) dudit fondoir (10).

3. Dispositif selon la revendication 1 ou 2 dans lequel ledit fondoir (10) comprend des orifices de distribution de colle fondue (125), ledit bras de support (12) étant traversé par au moins un canal d'acheminement de colle fondue (127), ledit canal (127) comprenant une entrée coopérant directement avec un desdits orifices de distribution de colle fondue (125) dudit fondoir (10) et au moins une sortie, ladite au moins une buse (11) fixée audit bras de support (12) comprenant un orifice d'introduction de colle fondue coopérant directement avec ladite sortie dudit canal (127) dudit bras de support (12).

4. Dispositif selon l'une quelconque des revendications 1 à 3 dans lequel ledit bras de support (12) est relié de manière mobile en rotation audit fondoir (10) de façon à régler l'écartement entre lesdites buses d'application (11).

5. Dispositif selon la revendication 4, dans lequel l'une des extrémités dudit bras de support (12à est reliée audit fondoir (10) au moyen d'une liaison pivot (13).

6. Dispositif selon la revendication 4 ou 5, dans lequel ledit bras de support (12) comprend une pluralité de portions de bras articulées entre-elles deux-à-deux.

7. Dispositif selon la revendication 6 dans lequel lesdites portions de bras sont articulées entre-elles au moyen de liaisons pivot d'axes essentiellement parallèles entre eux et à l'axe de la liaison pivot (13) reliant ladite extrémité dudit bras de support (12) audit fondoir (10).

8. Dispositif selon l'une quelconque des revendications 1 à 3 dans lequel ledit bras de support (12) est relié de manière mobile en translation audit fondoir (10) de façon à régler l'écartement entre lesdites buses d'application (11).

9. Dispositif selon l'une quelconque des revendications 1 à 8 comprenant des premiers moyens de solidarisation d'une desdites buses d'applications (11) à l'extrémité dudit bras de support (12), lesdits premiers moyens de solidarisation comprenant plusieurs premiers points de solidarisation (15) répartis le long d'un premier axe de réglage (B).

10. Dispositif selon l'une quelconque des revendications 1 à 9 comprenant des deuxièmes moyens de solidarisation d'une desdites buses d'application (11) audit fondoir (10), lesdits deuxièmes moyens de solidarisation comprenant plusieurs deuxièmes points de solidarisation (18) répartis le long d'un deuxième axe de réglage ^{©}.

11. Dispositif selon les revendications 9 et 10 dans lequel lesdits premier (B) et deuxième (C) axes de réglage s'étendent dans un même plan.

12. Dispositif selon l'une quelconque des revendications 1 à 11 comprenant des moyens de réglage (16, 170) de la position dudit bras de support (12) par rapport audit fondoir (10).

13. Dispositif selon la revendication 12 dans lequel lesdits moyens de réglage de la position dudit bras de support (12) par rapport audit fondoir (10) sont manuels ou mécanisés.

## Patentansprüche

1. Vorrichtung zur Verteilung von Schmelzkleber (1), umfassend ein Kleber-Schmelzgerät (10) und mindestens zwei Düsen zum Auftragen von Kleber (11),
**dadurch gekennzeichnet, dass** eine der Düsen (11) am Schmelzgerät (10) befestigt ist, wobei die andere der Düsen (11) mit dem Ende eines Haltearms (12) verbunden ist, wobei der Haltearm (12) beweglich mit dem Schmelzgerät (10) verbunden ist, um den Abstand zwischen den Düsen zum Auftragen (11) einzustellen,
wobei die mindestens eine am Schmelzgerät (10) befestigte Düse (11) und der Haltearm (12) in direkter Fluidverbindung mit dem Schmelzgerät (10) stehen, und wobei die mindestens eine am Haltearm (12) befestigte Düse (11) in direkter Fluidverbindung mit dem Haltearm (12) steht.

2. Vorrichtung nach Anspruch 1, bei der das Schmelzgerät (10) Öffnungen (125) zum Verteilen von Schmelzkleber umfasst, wobei die mindestens eine am Schmelzgerät (10) befestigte Düse (11) eine Öffnung zum Einführen von Schmelzkleber umfasst, die direkt mit einer der Öffnungen zum Verteilen von Schmelzkleber (125) des Schmelzgeräts (10) zusammenwirkt.

3. Vorrichtung nach Anspruch 1 oder 2, bei der das Schmelzgerät (10) Öffnungen (125) zum Verteilen von Schmelzkleber umfasst, wobei der Haltearm (12) von mindestens einem Kanal (127) zur Weiterleitung von Schmelzkleber durchquert wird, wobei der Kanal (127) einen Eingang, der direkt mit einer der Öffnungen (125) zum Verteilen von Schmelzkleber des Schmelzgeräts (10) zusammenwirkt, und mindestens einen Ausgang umfasst, wobei die mindestens eine am Haltearm (12) befestigte Düse (11) eine Öffnung zum Einführen von Schmelzkleber umfasst, die direkt mit dem Ausgang des Kanals (127) des Haltearms (12) zusammenwirkt.

4. Vorrichtung nach einem der Ansprüche 1 bis 3, bei der der Haltearm (12) drehbeweglich mit dem Schmelzgerät (10) verbunden ist, um den Abstand zwischen den Düsen zum Auftragen (11) einzustellen.

5. Vorrichtung nach Anspruch 4, bei der eines der Enden des Haltearms (12) mit dem Schmelzgerät (10) mittels einer Schwenkverbindung (13) verbunden ist.

6. Vorrichtung nach Anspruch 4 oder 5, bei der der Haltearm (12) eine Vielzahl von Armabschnitten umfasst, die paarweise miteinander gelenkig verbunden sind.

7. Vorrichtung nach Anspruch 6, bei der die Armabschnitte durch Schwenkverbindungen mit Achsen gelenkig verbunden sind, die im Wesentlichen zueinander und zur Achse der Schwenkverbindung (13) parallel sind, die das Ende des Haltearms (12) mit dem Schmelzgerät (10) verbindet.

8. Vorrichtung nach einem der Ansprüche 1 bis 3, bei der der Haltearm (12) translatorisch beweglich mit dem Schmelzgerät (10) verbunden ist, um den Abstand zwischen den Düsen zum Auftragen (11) einzustellen.

9. Vorrichtung nach einem der Ansprüche 1 bis 8, umfassend erste Mittel zur Verbindung einer der Düsen zum Auftragen (11) mit dem Ende des Haltearms (12), wobei die ersten Mittel zur Verbindung mehrere erste Verbindungspunkte (15) umfassen, die entlang einer ersten Einstellachse (B) verteilt sind.

10. Vorrichtung nach einem der Ansprüche 1 bis 9, umfassend zweite Mittel zur Verbindung einer der Düsen zum Auftragen (11) mit dem Schmelzgerät (10), wobei die zweiten Mittel zur Verbindung mehrere zweite Verbindungspunkte (18) umfassen, die entlang einer zweiten Einstallachse (C) verteilt sind.

11. Vorrichtung nach den Ansprüchen 9 und 10, bei der sich die ersten (B) und zweiten (C) Einstellachsen in einer gemeinsamen Ebene erstrecken.

12. Vorrichtung nach einem der Ansprüche 1 bis 11, umfassend Mittel (16, 170) zum Einstellen der Position des Haltearms (12) in Bezug zum Schmelzgerät (10).

13. Vorrichtung nach Anspruch 12, bei der die Mittel zum Einstellen der Position des Haltearms (12) in Bezug zum Schmelzgerät (10) manuell oder mechanisch sind.

## Claims

1. Molten adhesive dispensing device (1) comprising an adhesive melter (10) and at least two adhesive application nozzles (11),
**characterised in that** one of the nozzles (11) is fixed to the melter (10), the other of the nozzles (11) being fixedly joined to the end of a support arm (12), the support arm (12) being movably connected to the melter (10) so as to adjust the spacing between the application nozzles (11),
the at least one nozzle (11) fixed to the melter (10) and the support arm (12) being in direct fluid communication with the melter (10) and the at least one nozzle (11) fixed to the support arm (12) being in direct fluid communication with the support arm (12).

2. Device according to claim 1, wherein the melter (10) comprises molten adhesive dispensing openings (125), the at least one nozzle (11) fixed to the melter (10) comprising a molten adhesive introduction opening which cooperates directly with one of the molten adhesive dispensing openings (125) of the melter (10).

3. Device according to claim 1 or 2, wherein the melter (10) comprises molten adhesive dispensing openings (125), the support arm (12) being passed through by at least one molten adhesive conveying channel (127), the channel (127) comprising an inlet which cooperates directly with one of the molten adhesive dispensing openings (125) of the melter (10) and at least one outlet, the at least one nozzle (11) fixed to the support arm (12) comprising a molten adhesive introduction opening which cooperates directly with the outlet of the channel (127) of the support arm (12).

4. Device according to any one of claims 1 to 3, wherein the support arm (12) is connected so as to be rotationally movable to the melter (10) so as to adjust the spacing between the application nozzles (11).

5. Device according to claim 4, wherein one of the ends of the support arm (12) is connected to the melter (10) by means of a pivot joint (13).

6. Device according to claim 4 or 5, wherein the support arm (12) comprises a plurality of arm portions which are articulated to each other in pairs.

7. Device according to claim 6, wherein the arm portions are articulated to each other by means of pivot joints with axes which are substantially parallel with each other and with the axis of the pivot joint (13) which connects the end of the support arm (12) to the melter (10).

8. Device according to any one of claims 1 to 3, wherein the support arm (12) is connected so as to be movable in translation relative to the melter (10) so as to adjust the spacing between the application nozzles (11).

9. Device according to any one of claims 1 to 8, comprising first fixing means for one of the application nozzles (11) with respect to the end of the support arm (12), the first fixing means comprising a plurality of first fixing points (15) which are distributed over a first adjustment axis (B).

10. Device according to any one of claims 1 to 9, comprising second fixing means for one of the application nozzles (11) with respect to the melter (10), the second fixing means comprising a plurality of second fixing points (18) which are distributed over a second adjustment axis (C).

11. Device according to claims 9 and 10, wherein the first (B) and second (C) adjustment axes extend in the same plane.

12. Device according to any one of claims 1 to 11, comprising adjustment means (16, 170) for the position of the support arm (12) relative to the melter (10).

13. Device according to claim 12, wherein the adjustment means for the position of the support arm (12) relative to the melter (10) are manual or mechanised.
